# EUROPEAN PATENT APPLICATION

(11) **EP 4 835 838 A1**
(43) Date of publication of application: **04.11.2026**
(21) Application number: 26174832.1
(22) Date of filing: 27.04.2026
(51) Int. Cl.: G06V 10/82, G06V 10/98, G06V 20/58

(54) **INFORMATION PROCESSING APPARATUS, INFORMATION PROCESSING METHOD, AND STORAGE MEDIUM**

(30) Priority: 30.04.2025 JP 2025075728
(71) Applicant: Toyota Jidosha Kabushiki Kaisha, Toyota-shi, Aichi-ken 471-8571 (JP)
(72) Inventor: TANABE, Ken, Tokyo, 103-0022 (JP)
(74) Representative: D Young & Co LLP

(57) **Abstract**

An information processing apparatus (10) comprises a controller (11) configured to: acquire a plurality of images acquired by a plurality of cameras (20) mounted on a mobile body (1), perform a detection process of detecting a predetermined object in a periphery of the mobile body based on the plurality of images, and determine occurrence/non-occurrence of an abnormality for each of the plurality of cameras (20), wherein in a case where occurrence of an abnormality is determined for at least one of the plurality of cameras (20), the controller (11) generates dummy data corresponding to a camera for which the abnormality is determined, and performs the detection process by using the dummy data.

## Description

### BACKGROUND

### Technical Field

The present disclosure relates to a vehicle technology.

### Description of the Related Art

There is a technology for recognizing a road region in real time while sensing a road environment by an onboard camera.

In relation to this, Japanese Patent Laid-Open No. 2001-211466 discloses a system for detecting a failure of an onboard camera.

### SUMMARY

An object of the present disclosure is to reduce an impact of a failure of a camera in a system that performs object detection based on an image.

The present disclosure in its one aspect provides an information processing apparatus comprising a controller configured to: acquire a plurality of images acquired by a plurality of cameras mounted on a mobile body, perform a detection process of detecting a predetermined object in a periphery of the mobile body based on the plurality of images, and determine occurrence/non-occurrence of an abnormality for each of the plurality of cameras, wherein in a case where occurrence of an abnormality is determined for at least one of the plurality of cameras, the controller generates dummy data corresponding to a camera for which the abnormality is determined, and performs the detection process by using the dummy data.

The present disclosure in its another aspect provides an information processing method performed by an information processing apparatus, the method comprising: acquiring a plurality of images acquired by a plurality of cameras mounted on a mobile body; performing a detection process of detecting a predetermined object in a periphery of the mobile body based on the plurality of images; determining occurrence/non-occurrence of an abnormality for each of the plurality of cameras; and generating, in a case where occurrence of an abnormality is determined for at least one of the plurality of cameras, dummy data corresponding to a camera for which the abnormality is determined, and performing the detection process by using the dummy data.

As another aspect, a program for causing a computer to perform the information processing method described above, and a non-transitory computer-readable storage medium storing the program may be cited.

According to the present disclosure, an impact of a failure of a camera can be reduced in a system that performs object detection based on an image.

### BRIEF DESCRIPTION OF THE DRAWINGS

Fig. 1 is a diagram for describing a method of autonomous driving performed by a vehicle 1;
Figs. 2A and 2B are diagrams for describing a problem of the present disclosure;
Fig. 3 is a diagram describing a configuration of the vehicle 1 and an onboard apparatus 10;
Figs. 4A and 4B are diagrams describing an outline of an estimation model according to a first embodiment;
Fig. 5 is a diagram describing a flow of data according to the first embodiment;
Fig. 6 is a flowchart of processes performed by the onboard apparatus 10 in the first embodiment;
Fig. 7 is a diagram describing an outline of an estimation model according to a second embodiment;
Fig. 8 is a diagram describing a flow of data according to the second embodiment; and
Fig. 9 is a flowchart of processes performed by the onboard apparatus 10 in the second embodiment.

### DESCRIPTION OF THE EMBODIMENTS

In recent years, studies are being conducted on an autonomous driving system in which a vehicle is caused to travel autonomously along a route that is set in advance. In autonomous driving, a vehicle determines position and orientation of the subject vehicle by comparing a road map that is stored in advance and a result of sensing a road environment, for example.

For example, the autonomous vehicle recognizes a position of a predetermined object on a road (typically, a lane line) based on an image acquired by each of a plurality of cameras that are mounted, and generates a scheduled trajectory by estimating a position of the subject vehicle based on a result of the recognition.

With such a system, it is desirable to prepare for a failure.

For example, if one of a plurality of onboard cameras fails and outputs an erroneous image, a recognition process of a lane line or the like may be performed based on the erroneous image, and a flawed schedule trajectory is possibly generated as a result. However, it is not desirable, for safety reasons, to immediately stop a driving system of the autonomous vehicle upon detection of a failure of a camera.

To cope with the problem, it is desirable to continue with a process for autonomous driving while suppressing an impact of a camera with an abnormality on the system as much as possible. An information processing apparatus according to the present disclosure solves such a problem.

An information processing apparatus according to an aspect of the present disclosure includes a controller configured to acquire a plurality of images acquired by a plurality of cameras mounted on a mobile body, perform a detection process of detecting a predetermined object in a periphery of the mobile body based on the plurality of images, and determine occurrence/non-occurrence of an abnormality for each of the plurality of cameras, where, in a case where occurrence of an abnormality is determined for at least one of the plurality of cameras, the controller generates dummy data corresponding to a camera for which the abnormality is determined, and performs the detection process by using the dummy data.

The information processing apparatus according to the present disclosure is typically an apparatus mounted on a mobile body (such as a car), but may instead be a server apparatus that is capable of communicating with the mobile body.

The controller performs a process of detecting a predetermined object in a periphery of the mobile body based on images acquired by the plurality of cameras. The object as a detection target is typically a lane line, but is not limited thereto. A result of object detection may be used in a process of recognizing a region (road region) where the mobile body can travel.

Furthermore, the controller determines that there is occurrence of an abnormality in at least one of the plurality of cameras. Determination of an abnormality can be performed using any method. For example, in the case where an image including a predetermined characteristic is output by a camera, the controller may determine that there is occurrence of an abnormality in the camera. For example, an image including a predetermined characteristic may be an image for which a statistical value (average, variance, deviation, etc.) of a luminance, a saturation, a hue or the like satisfies a predetermined threshold. Moreover, an image including a predetermined characteristic may be an image for which an edge having an intensity at or greater than a predetermined value is not detected.

Moreover, determination of an abnormality may be performed using other than an image. For example, in the case where a signal including a predetermined characteristic is output by a camera, the controller may determine that there is occurrence of an abnormality in the camera. For example, in the case where a signal that is not generated by a normal operation is output by a camera, it can be estimated that there is occurrence of an abnormality in the camera. Additionally, a signal may be an electrical signal or a data sequence obtained based on an electrical signal.

In a case where occurrence of an abnormality is determined for at least one of the plurality of cameras, the controller generates dummy data corresponding to a camera for which the abnormality is determined, and performs the detection process for an object by using the dummy data.

For example, in the case where object detection is performed based on a feature that is obtained by converting an image, the controller may generate, as dummy data, a dummy feature for an image output by the camera for which an abnormality is determined. A dummy feature is data that does not contribute to object detection, such as a set of null values. Object detection can thus be continued while suppressing an impact of an image that is generated by the camera for which the abnormality occurred.

Additionally, in a case where the detection process is to be performed by using a machine leaning model that is trained in advance, using a plurality of images for training, to detect the predetermined object from an image, a different approach can be adopted.

For example, in the case of using a machine learning model that is trained such that a contribution rate of a predetermined dummy image in object detection is reduced to or below a predetermined value, an image output by a camera with a possible abnormality may be replaced with a dummy image. Such a method may also allow object detection to continue while suppressing an impact of a camera for which there is occurrence of an abnormality.

In the following, embodiments of the present disclosure will be described with reference to the drawings. The configurations of the embodiments described below are merely examples, and the present disclosure is not limited to the configurations of the embodiments.

### (First Embodiment)

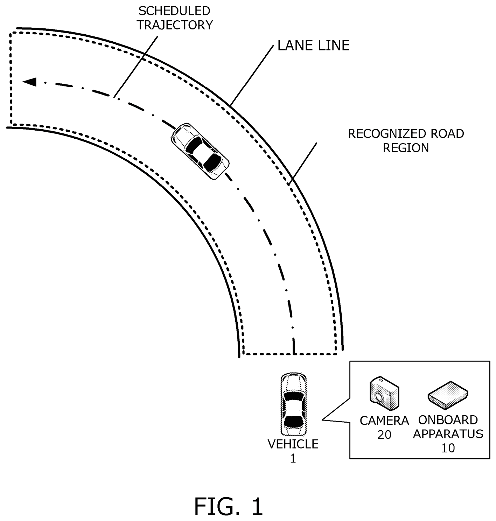

An outline of a vehicle system according to a first embodiment will be described with reference to Fig. 1. The vehicle system according to the present embodiment includes an onboard apparatus 10 mounted on a vehicle 1, and a camera 20 mounted on the vehicle 1.

Additionally, in the present embodiment, the vehicle 1 includes a plurality of onboard cameras. In the following description, the term "camera 20" refers to each of the plurality of onboard cameras.

The onboard apparatus 10 mounted on the vehicle 1 recognizes a road region around the subject vehicle based on images captured by the plurality of cameras 20, and performs control of causing the vehicle 1 to perform autonomous driving by using a recognition result. Data (route data) about a route to a destination is stored in the onboard apparatus 10, and traveling is performed according to the route data along the recognized road region.

A road region is a region where the vehicle 1 can travel. The road region can be recognized based on a result of detection of a line (lane line) separating a lane, for example. However, a target of detection is not limited to the lane line. In the present embodiment, a lane line is cited as an example of the target of detection, but a road edge, a lane center line, a road center line, a road sign, and the like may be taken as targets of recognition, for example.

In Fig. 1, a solid line indicates a lane line, and dotted lines indicate a road region. The onboard apparatus 10 recognizes the road region based on images acquired by the plurality of cameras 20, and generates a scheduled trajectory of the subject vehicle such that traveling is performed along the road region.

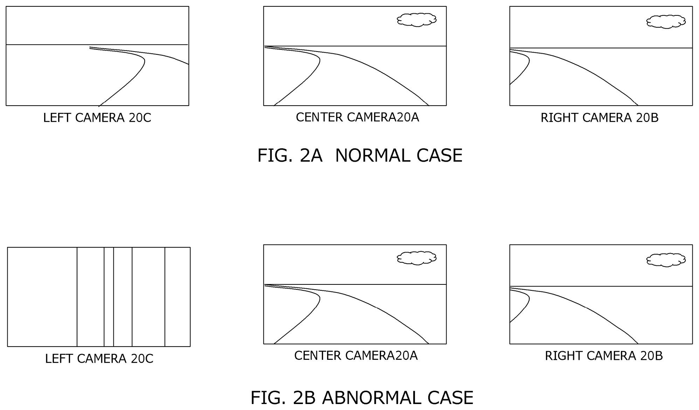

Figs. 2A and 2B are diagrams describing a problem to be solved by the vehicle system according to the first embodiment. Here, the vehicle 1 is assumed to include three cameras, namely, a camera 20A that is arranged at a front center of the vehicle, a camera 20B that is arranged at a front right of the vehicle, and a camera 20C that is arranged at a front left of the vehicle. Fig. 2A illustrates an example of an image captured by each camera of the vehicle 1 immediately before the vehicle 1 enters a curve illustrated in Fig. 1. As illustrated, in a normal case, the cameras output images capturing a same target from different positions.

Fig. 2B is a diagram illustrating an example where there is occurrence of an abnormality in one of the illustrated cameras (that is, the camera 20C). In the present example, it is assumed that there is occurrence of an abnormality in operation of the camera 20C and a normal image is not output. In the illustrated example, an abnormal image including vertical edges is output by the camera 20C. In this case, if the onboard apparatus 10 performs recognition of a lane line based on these three images, a correct position of the road region cannot be recognized. For example, if a curvature of a road is recognized to be lower than it actually is due to the image output by the camera 20C, the vehicle 1 may possibly veer off the road region.

To solve the problem, the onboard apparatus 10 according to the present embodiment determines occurrence/non-occurrence of an abnormality for a plurality of cameras of the subject vehicle, and performs a predetermined process based on the result of determination such that autonomous driving is not affected by an output from a camera for which there is occurrence of an abnormality.

### [Apparatus Configuration]

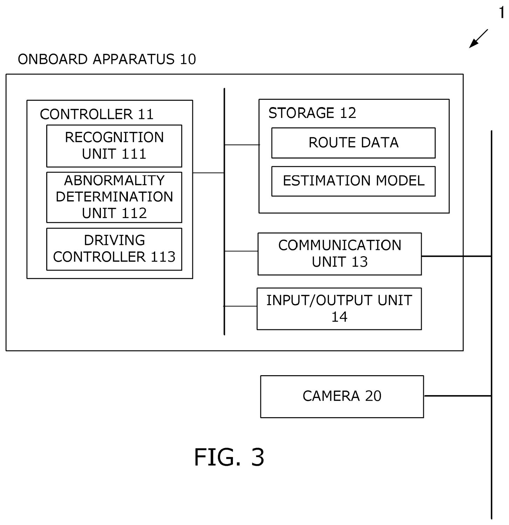

Fig. 3 is a diagram illustrating an example configuration of the vehicle 1. The vehicle 1 includes the onboard apparatus 10 and a plurality of cameras 20.

The onboard apparatus 10 can be configured as a computer including a processor (CPU, GPU, etc.), a main memory (RAM, ROM, etc.), and an auxiliary memory (EPROM, hard disk drive, removable medium, etc.). The auxiliary memory stores an operating system (OS), various programs, various tables and the like, and each function (software module) matching a predetermined object as described later can be implemented through execution of a program that is stored therein. However, one or some or all of functions may alternatively be implemented as a hardware module by a hardware circuit such as an ASIC or an FPGA, for example.

The onboard apparatus 10 includes a controller 11, a storage 12, a communication unit 13, and an input/output unit 14.

The controller 11 is an arithmetic unit that implements various functions of the onboard apparatus 10 by executing a predetermined program. For example, the controller 11 can be implemented by a hardware processor such as a CPU. Moreover, the controller 11 may include a RAM, a ROM (Read Only Memory), a cache memory, and the like.

The controller 11 includes three software modules, namely, a recognition unit 111, an abnormality determination unit 112, and a driving controller 113. Each software module may be implemented through execution of a program stored in the storage 12 described later by the controller 11 (CPU or the like).

The recognition unit 111 acquires images from the plurality of cameras 20, and recognizes a road region based on the acquired images. In the present embodiment, the recognition unit 111 converts an acquired image into a feature, and inputs the obtained feature to a machine learning model stored in the storage 12. The machine learning model is a model dedicated to estimation of a position of a lane line (in the following, an estimation model). The recognition unit 111 generates data indicating position information of a lane line (in the following, road region data) based on an output from the estimation model. The road region data is transmitted to the driving controller 113.

Furthermore, the recognition unit 111 acquires information about an abnormality in a camera from the abnormality determination unit 112 described later, and in the case where there is occurrence of an abnormality in any of the plurality of cameras 20, a predetermined process for suppressing an impact of the camera with the abnormality is performed. Details of the process will be given later.

Moreover, for example, the recognition unit 111 recognizes objects other than the lane line (such as another vehicle, a pedestrian, a traffic light, a road sign, and the like) that are present in a periphery of the vehicle, based on the images captured by the cameras 20. The recognition result is, like the recognition result for the road region, transmitted to the driving controller 113, and is used for autonomous driving.

The abnormality determination unit 112 determines occurrence of an abnormality in any of the plurality of cameras 20 by monitoring outputs from the plurality of cameras 20, and issues a notification to the recognition unit 111. The abnormality determination unit 112 determines occurrence of an abnormality in any of the plurality of cameras 20 by one of the followings. In the following description, a camera for which occurrence of an abnormality is determined will be referred to as an "abnormal camera".

### (1) Determination Based on Image

For example, the abnormality determination unit 112 can determine presence of an abnormal camera by analyzing an image (in the following, a camera image) output by each of the plurality of cameras 20. For example, the abnormality determination unit 112 acquires a statistical value (such as an average value) of brightness (luminance), saturation, or hue of a target camera image, and determines occurrence of an abnormality in the corresponding camera in a case where the acquired value satisfies a predetermined condition. For example, it is estimated that there is occurrence of an abnormality in a camera, in a case where an average value of brightness is too high (or too low) or a hue is uneven.

Alternatively, the abnormality determination unit 112 may perform predetermined image processing on a target camera image, and may determine occurrence of an abnormality in the corresponding camera based on the result. For example, the abnormality determination unit 112 may perform a process of detecting an edge in a target camera image, and may determine occurrence of an abnormality in the corresponding camera (that is, a lane line is not correctly captured), in a case where an edge having an intensity at or greater than a predetermined value is not detected.

### (2) Determination Based on Signal

Furthermore, for example, the abnormality determination unit 112 can determine an abnormality by analyzing signals output from the plurality of cameras 20. For example, in the case where an electrical signal or a data sequence not according to a predetermined format or sequence is output from a target camera, the abnormality determination unit 112 can determine occurrence of an abnormality in the corresponding camera.

The driving controller 113 controls autonomous driving of the subject vehicle based on a result of recognition of a road region performed by the recognition unit 111. For example, the driving controller 113 controls autonomous driving of the vehicle by using both the recognition result of the road region and a recognition result of an obstacle generated by the recognition unit 111. For example, the driving controller 113 causes the subject vehicle to travel in such a manner that the subject vehicle travels along a route indicated by the route data and an obstacle does not enter a predetermined safe region centering on the subject vehicle. As a method of causing the vehicle to perform autonomous driving, any known method can be adopted. Additionally, the route data is data for guiding a route, and is typically information for notifying of positions at which left and right turns are to be made to reach a destination, an interchange to be used, and the like.

The storage 12 is means for storing information, and is a storage medium such as a RAM, a magnetic disk, or a flash memory. A program to be executed by the controller 11, data to be used by the program, and the like are stored in the storage 12. Furthermore, the route data described above and the estimation model are stored in the storage 12.

The estimation model is a machine learning model that takes, as an input, features obtained based on a plurality of camera images, and that outputs position information of a lane line.

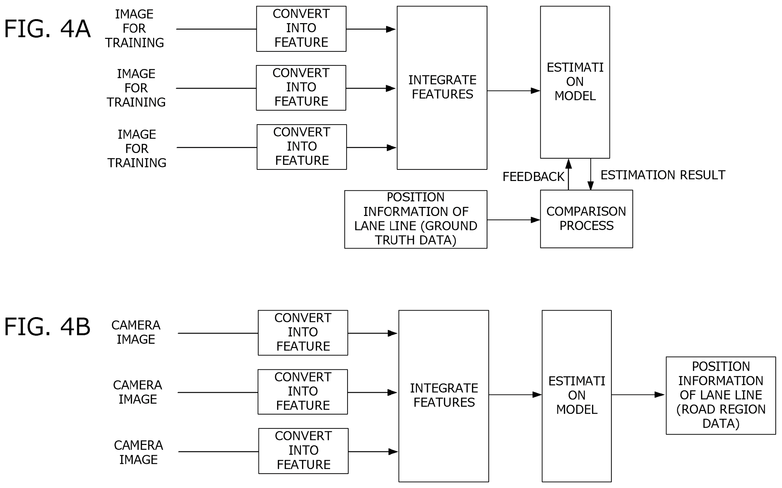

Fig. 4A is a diagram describing a method of training the estimation model. As illustrated, the estimation model is obtained by performing training by taking, as input data, a feature that is obtained by converting an image for training (for example, an image captured by a vehicle that traveled on a road that actually exists), and by taking, as ground truth data, position information of a lane line included in the image for training (for example, accurate position information of a lane line obtained from a high-definition map of roads). Additionally, accurate position information of a lane line may be represented by a coordinate on a three-dimensional coordinate system (vehicle coordinate system) that is based on the vehicle 1, for example.

In the training, a result of comparison between an estimation result from the estimation model and the ground truth data is fed back to the estimation model, and a parameter is updated in such a manner that a difference between the estimation result and the ground truth data becomes small.

Additionally, in the present example, images acquired by the plurality of cameras 20 are converted into features, and these features are integrated, and a feature after integration is input to the estimation model. This is because the plurality of cameras 20 are mounted on different positions on the vehicle 1, and a process for eliminating parallax is necessary.

Fig. 4B is a diagram describing a method of performing estimation by using a trained estimation model. As illustrated, position information of a lane line can be obtained by inputting, to the estimation model, a feature obtained based on a plurality of images acquired by the onboard cameras. Also in a phase of estimation, as in a training phase, a process of integrating features is performed.

The communication unit 13 is a wireless communication interface for connecting the onboard apparatus 10 to an in-vehicle network.

The input/output unit 14 is a unit that receives an input operation performed by an onboard person of the vehicle, and that presents information to the onboard person, and is, in the present embodiment, one touch panel display, or in other words, a liquid crystal display and control means thereof, or a touch panel and control means thereof.

Additionally, with respect to a specific hardware configuration of the onboard apparatus 10, structural elements may be omitted, replaced or added as appropriate according to the embodiment. For example, the controller 11 may include a plurality of hardware processors. The hardware processors may be a microprocessor, an FPGA, a GPU, and the like. Moreover, an input/out device (such as an optical drive) other than those cited as examples may be added. Alternatively, the onboard apparatus 10 may be configured by a plurality of computers. In this case, the hardware configurations of the computers may be the same or different.

The cameras 20 are a plurality of cameras provided on the vehicle 1. The plurality of cameras 20 are mounted on different positions on the vehicle 1 such that entire surroundings of the vehicle 1 can be captured, for example.

### [Details of Processes Performed by Onboard Apparatus]

Next, details of processes performed by the recognition unit 111 and the abnormality determination unit 112 will be given.

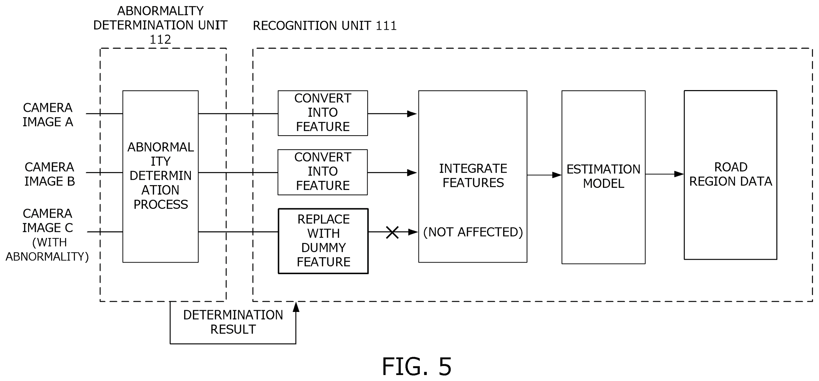

Fig. 5 is a diagram illustrating a flow of data in a process of recognition of a road region by the onboard apparatus 10 (estimation phase).

First, the abnormality determination unit 112 acquires a camera image output from each of the plurality of cameras 20, and determines presence/absence of an abnormality for each camera by the method described above. A result of determination is transmitted to the recognition unit 111. In the illustrated example, a camera image A is output from the camera 20A, a camera image B is output from the camera 20B, and a camera image C is output from the camera 20C. Furthermore, it is assumed that there is occurrence of an abnormality in the camera 20C, and that there is an abnormality in the camera image C. In this case, the abnormality determination unit 112 transmits, to the recognition unit 111, a determination result indicating occurrence of an abnormality in the camera 20C.

The plurality of camera images are input to the recognition unit 111.

The recognition unit 111 performs predetermined processing on an acquired camera image, and converts the image into a feature. In the present embodiment, the feature is a set of two-dimensional coordinates of pixels that are estimated to represent a lane line (for example, white pixels). These coordinates are represented on a two-dimensional coordinate system (camera coordinate system) that is based on each camera.

Furthermore, the recognition unit 111 integrates the features corresponding to the respective cameras. For example, the features can be integrated by projecting the features (two-dimensional coordinates) corresponding to the cameras onto a common three-dimensional space. A projection target space is a space on a three-dimensional coordinate system (vehicle coordinate system) that is based on the vehicle 1. This space will be referred to as a feature space. The feature after integration is a set of three-dimensional coordinates representing a position where the lane line is present in the feature space.

Moreover, the recognition unit 111 inputs the feature after integration (set of three-dimensional coordinates in the feature space) to the estimation model that is a machine learning model for recognizing the road region.

The estimation model takes, as an input, the set of three-dimensional coordinates in the feature space, and outputs estimated position information of the lane line on the vehicle coordinate system. Data including the estimated position information of the lane line will be referred to as "road region data".

The recognition unit 111 transmits the road region data output from the estimation model to the driving controller 113, and the driving controller 113 controls autonomous driving of the vehicle 1 using the same.

Additionally, in the case where a notification indicating presence of an abnormal camera is received from the abnormality determination unit 112, the recognition unit 111 replaces the feature corresponding to the image acquired by the abnormal camera with a dummy feature. A dummy feature is a feature that does not affect processing by the estimation model. For example, the dummy feature may be a feature that is not projected onto the feature space, such as a set of null values. When such a feature is generated, an impact of an image output by an abnormal camera can be eliminated in the estimation process by the estimation model.

### [Process Flowchart]

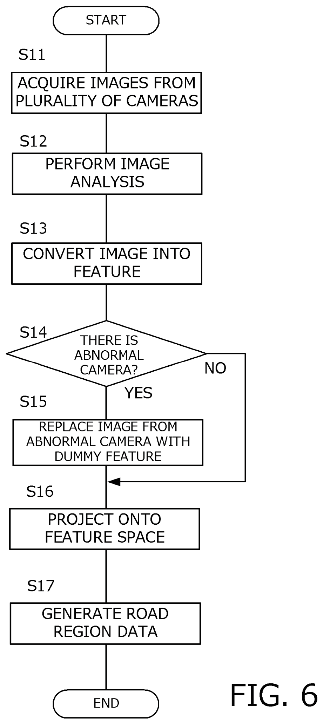

Next, a flow of processes performed by the onboard apparatus 10 will be described. Fig. 6 is a flowchart of processes performed by the onboard apparatus 10. The illustrated processes are periodically performed during traveling of the vehicle 1.

First, in step S11, the abnormality determination unit 112 acquires images from the plurality of cameras 20.

Next, in step S12, the abnormality determination unit 112 performs image analysis to determine presence/absence of a camera for which there is occurrence of an abnormality. In the present step, the abnormality determination unit 112 analyzes each of a plurality of images from a predetermined standpoint so as to determine presence/absence of a camera that output an image that is not normally obtained. For example, in the case where a range or an average value of brightness, saturation, or hue is deviated from a normal range, an abnormality in the corresponding camera can be determined. An analysis result is transmitted to the recognition unit 111. The plurality of images are also transmitted from the abnormality determination unit 112 to the recognition unit 111.

Additionally, as described above, presence/absence of an abnormality in a camera can be determined not only by the method of analyzing an image but also by a method of analyzing a signal output from the camera 20. In this case, the abnormality determination unit 112 may transmit a result of analyzing an electrical signal, a data sequence or the like to the recognition unit 111.

Next, in step S13, the recognition unit 111 converts the plurality of images into features. For example, in the present step, pixels that are estimated to represent a lane line may be extracted from each image, and a set of corresponding coordinates may be taken as a feature.

Next, in step S14, the recognition unit 111 determines presence/absence of a camera (abnormal camera) where there is occurrence of an abnormality, based on the analysis result received from the abnormality determination unit 112, and in the case where there is an abnormal camera, a feature corresponding to the image output by the abnormal camera is replaced with the dummy feature (step S15). In the case where there is no abnormal camera, the process proceeds to step S16.

In step S16, the recognition unit 111 projects the generated features (including the dummy feature) onto a predetermined feature space. The feature space is a three-dimensional space having a coordinate system that is based on the vehicle. Due to the process in the present step, the position of the lane line captured by each camera is projected onto the feature space. Additionally, at this time, the dummy feature does not affect the projection result.

Next, in step S17, the recognition unit 111 estimates the position of the lane line based on the feature projected on the feature space, and recognizes the road region. In the present step, the recognition unit 111 inputs a set of three-dimensional coordinates representing the position of the lane line in the feature space to the estimation model, and acquires the estimated position information of the lane line as an output. Furthermore, the recognition unit 111 generates the road region data including the acquired position information.

The generated road region data is transmitted from the recognition unit 111 to the driving controller 113, and is used to control autonomous driving of the vehicle 1.

As described above, the onboard apparatus 10 according to the first embodiment determines occurrence of an abnormality in any of the plurality of cameras 20 mounted on the vehicle based on images acquired by the plurality of cameras 20. Moreover, the recognition process of the lane line is performed after an image output from the camera for which occurrence of an abnormality is determined is replaced with the dummy feature.

According to such a configuration, an impact of an image output by an abnormal camera can be eliminated in the recognition process of the lane line. Accordingly, even when a camera fails, traveling of the vehicle can be continued while securing safety.

Additionally, in a case where there is occurrence of an abnormality in a camera, traveling can be continued while cutting off the camera in question from the system for safety reasons. However, if an abnormal camera is cut off from the system, data cannot be acquired from the camera, and failure diagnosis cannot be performed unless in a factory.

By contrast, in the present embodiment, because replacement by a dummy feature is performed while continuing acquisition of images from the abnormal camera, images output from the abnormal camera can be accumulated or transmitted in real time to a diagnosis apparatus via a network. That is, failure diagnosis can be expected to be swiftly performed.

### (Second Embodiment)

In the first embodiment, an image output from an abnormal camera is replaced with a dummy feature to eliminate an impact of the image output from the abnormal camera. By contrast, a second embodiment is an embodiment in which an image output from the abnormal camera is itself replaced with a dummy image.

In the first embodiment, a feature obtained by converting an image is replaced with a dummy and input to the estimation model, but in a case where an input image (dummy image) that does not affect an output is defined in advance and the estimation model is trained with a characteristic of the dummy image, a same effect as the first embodiment can be achieved by replacing the input image itself.

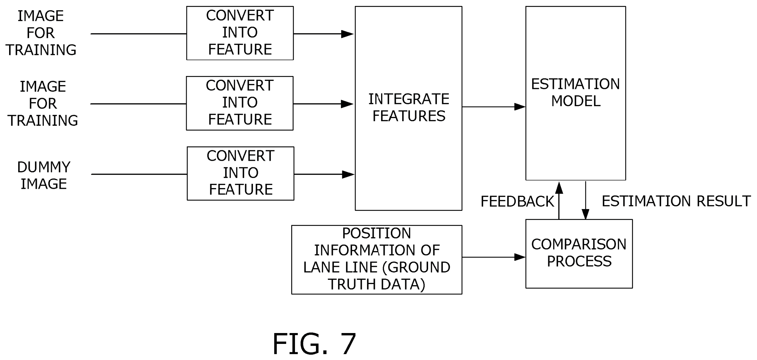

Fig. 7 is a diagram describing a training phase of the estimation model in the second embodiment. In the present embodiment, training of the estimation model is performed by replacing a part of images for training with a dummy image. A dummy image may be a solid-painted image or an image including a predetermined pattern image. The dummy image is an image not relevant to the position of a lane line, and thus, by performing training using a data set including the dummy image, a contribution rate of the dummy image for the output nears zero as the training proceeds.

Additionally, in the present example, an example is cited where a part of input data is replaced with the dummy image in a normal training process, but training may instead be performed by taking only the dummy image as the input and by using ground truth data indicating "absence of a lane line in the image". That "the dummy image does not contribute to recognition of a lane line" can thus be learnt.

In the second embodiment, training of the estimation model is performed in such a manner that the contribution rate of the dummy image to an output is reduced to or below a predetermined value. Additionally, the dummy image may be an image that does not affect a feature projection result.

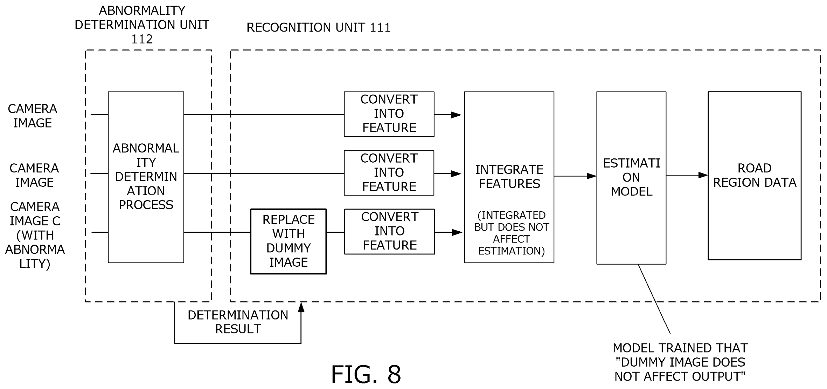

Fig. 8 is a diagram illustrating a flow of data in a process performed by the onboard apparatus 10 in the second embodiment to recognize a road region (estimation phase).

In the second embodiment, the recognition unit 111 that received a determination result from the abnormality determination unit 112 replaces an image output from the abnormal camera with the dummy image. The dummy image is converted into a feature like a normal camera image, and is made a target of integration.

However, in the present embodiment, a feature based on the dummy image is a target of integration but does not affect an estimation result from the estimation model. Accordingly, as in the first embodiment, even when there is occurrence of an abnormal camera, an impact of an image output from the abnormal camera can be eliminated.

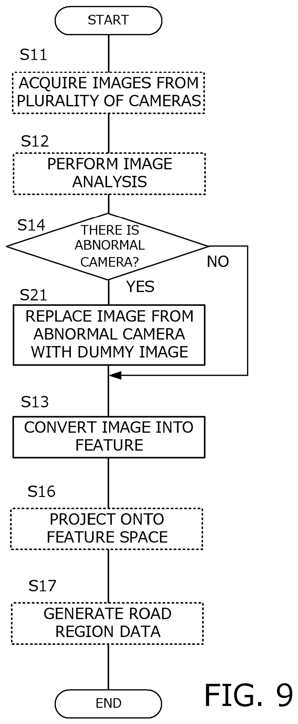

Fig. 9 is a flowchart of processes performed by the onboard apparatus 10 in the second embodiment. Steps indicated by dotted lines are same as the processes in the first embodiment.

In the present embodiment, after image analysis is performed in step S12, a step (step S14) of determining presence/absence of an abnormal camera is performed before an image is converted into a feature. In the case where there is an abnormal camera, the process proceeds to step S21, and a process of replacing the image output by the abnormal camera with the dummy image is performed, and then, conversion of the image into a feature is performed (step S13). In the case where there is no abnormal camera, the process proceeds from step S14 to step S13, and the process is continued.

When step S13 is complete, the process proceeds to step S16, and same processes as in the first embodiment are performed.

As described above, the same effect as in the first embodiment can be achieved by replacing an image output by an abnormal camera with the dummy image.

### (Modification)

The embodiments described above are merely examples, and the present disclosure may be changed as appropriate within the scope of the disclosure.

For example, processes and means described in the present disclosure can be freely combined to the extent that no technical conflict exists.

Furthermore, in the description of the embodiments, an example is described where the onboard apparatus 10 recognizes the road region, but recognition of the road region may instead be performed by a server apparatus installed at a location different from the vehicle 1. In this case, the camera image may be transmitted from the onboard apparatus 10 to the server apparatus, and a result of recognition of a road region (road region data) may be transmitted from the server apparatus to the onboard apparatus.

Moreover, in the description of the embodiments, a specific example is described in relation to a process performed by the onboard apparatus 10 to recognize a lane line, but any object on a road (such as a traffic light or a road sign), or an object moving on a road (such as another vehicle) may be taken as a recognition target. Also in the case of a process of recognizing an object other than the lane line, the dummy data described in the embodiments may be used.

Furthermore, a process that is described to be performed by one apparatus may be shared and performed by a plurality of apparatuses. Processes described to be performed by different apparatuses may be performed by one apparatus. Which function is to be implemented by which hardware configuration (server configuration) in a computer system may be flexibly changed.

The present disclosure may also be implemented by supplying computer programs for implementing the functions described in the embodiments described above to a computer, and by one or more processors of the computer reading out and executing the programs. Such computer programs may be provided to the computer by a non-transitory computer-readable storage medium that can be connected to a system bus of the computer, or may be provided to the computer through a network. The non-transitory computer-readable storage medium may be any type of disk including magnetic disks (floppy (registered trademark) disks, hard disk drives (HDDs), etc.) and optical disks (CD-ROMs, DVD discs, Blu-ray discs, etc.), read-only memories (ROMs), random access memories (RAMs), EPROMs, EEPROMs, magnetic cards, flash memories, optical cards, and any type of medium suitable for storing electronic instructions.

## Claims

1. An information processing apparatus (10) comprising a controller (11) configured to:
acquire a plurality of images acquired by a plurality of cameras (20) mounted on a mobile body (1),
perform a detection process of detecting a predetermined object in a periphery of the mobile body based on the plurality of images, and
determine occurrence/non-occurrence of an abnormality for each of the plurality of cameras (20), wherein
in a case where occurrence of an abnormality is determined for at least one of the plurality of cameras (20), the controller (11) generates dummy data corresponding to a camera for which the abnormality is determined, and performs the detection process by using the dummy data.

2. The information processing apparatus according to claim 1, wherein
in a case where an image or a signal with a predetermined characteristic is output by a camera (20), the controller (11) determines occurrence of an abnormality in the camera (20).

3. The information processing apparatus according to claim 1, wherein
the detection process is performed based on a feature that is obtained by converting each of the plurality of images.

4. The information processing apparatus according to claim 3, wherein
the controller (11) generates, as the dummy data, a dummy feature for an image output by the camera (20) for which the abnormality is determined.

5. The information processing apparatus according to claim 4, wherein
the dummy feature is a feature that does not contribute to detection of the predetermined object.

6. The information processing apparatus according to claim 1, wherein
the detection process is performed by using a machine leaning model that is trained in advance, using a plurality of images for training, to detect the predetermined object from an image.

7. The information processing apparatus according to claim 6, wherein
the machine learning model is a model that is trained such that a contribution rate of a predetermined dummy image in object detection is reduced to or below a predetermined value.

8. The information processing apparatus according to claim 7, wherein
the controller (11) replaces an image output by the camera (20) for which the abnormality is determined with the dummy image.

9. An information processing method performed by an information processing apparatus (10), the method comprising:
acquiring a plurality of images acquired by a plurality of cameras (20) mounted on a mobile body (1);
performing a detection process of detecting a predetermined object in a periphery of the mobile body based on the plurality of images;
determining occurrence/non-occurrence of an abnormality for each of the plurality of cameras (20); and
generating, in a case where occurrence of an abnormality is determined for at least one of the plurality of cameras (20), dummy data corresponding to a camera for which the abnormality is determined, and performing the detection process by using the dummy data.

10. The information processing method according to claim 9, wherein
in a case where an image or a signal with a predetermined characteristic is output by a camera (20), occurrence of an abnormality in the camera (20) is determined.

11. The information processing method according to claim 9, wherein
the detection process is performed based on a feature that is obtained by converting each of the plurality of images.

12. The information processing method according to claim 11, wherein
a dummy feature is generated, as the dummy data, for an image output by the camera (20) for which the abnormality is determined.

13. The information processing method according to claim 12, wherein
the dummy feature is a feature that does not contribute to detection of the predetermined object.

14. The information processing method according to claim 9, wherein
the detection process is performed by using a machine leaning model that is trained in advance, using a plurality of images for training, to detect the predetermined object from an image.

15. A non-transitory storage medium storing a program for causing a computer to perform the information processing method according to claim 9.
